# FASCICULE DE BREVET EUROPEEN

(11) **EP 3 631 280 B1**
(45) Date de publication et mention de la délivrance du brevet: **31.03.2021**
(21) Numéro de dépôt: 18720335.1
(22) Date de dépôt: 16.04.2018
(51) Int. Cl.: F17C 5/00, F17C 5/06, F17C 7/04, F17C 13/02

(54) **STATION ET PROCEDE DE REMPLISSAGE DE RESERVOIR(S) DE GAZ SOUS PRESSION**
STATION UND VERFAHREN ZUR WIEDERBEFÜLLUNG VON UNTER DRUCK STEHENDEN GASTANKS
STATION AND METHOD FOR REFILLING PRESSURISED GAS TANKS

(30) Priorité: 31.05.2017 FR 1754787
(43) Date de publication de la demande: 08.04.2020
(73) Titulaire: L'AIR LIQUIDE, Société Anonyme pour l'Etude et l'Exploitation des Procédés Georges Claude, 75007 Paris (FR)
(72) Inventeur: GRANDJEAN, Sosthene, 78000 Versaille (FR); OTT, Thierry, 91800 Brunoy (FR)
(74) Mandataire: Air Liquide
(86) Numéro de dépôt international: PCT/FR2018/050949
(87) Numéro de publication internationale: WO 2018/220303

(56) Documents cités:
- EP-A2- 2 175 187
- DE-A1-102009 039 645

## Description

L'invention concerne une station et un procédé de remplissage de réservoir(s).

L'invention concerne plus particulièrement une station de remplissage de réservoir(s) de gaz sous pression, notamment d'hydrogène, comprenant une réserve de fluide liquéfié, une conduite de remplissage comprenant une extrémité amont reliée à la réserve de fluide liquéfié et une extrémité aval destinée être reliée à un réservoir à remplir, la conduite de remplissage comprenant, disposés en série, un vaporiseur, un compresseur principal et un échangeur de chaleur de refroidissement du fluide comprimé en aval du compresseur principal avant son transfert dans un réservoir à remplir.

Le remplissage de réservoirs de gaz à haute pression, notamment d'hydrogène, peut être réalisé à partir de gaz liquéfié qui est vaporisé. Cf. par exemple WO02064395A2. Un autre exemple de station est divulgué dans le document EP 2 175 187.

Les solutions connues sont cependant insatisfaisantes car soit elles ne permettent pas de réaliser des remplissages rapides de gaz avec pré-refroidissement soit elles ne permettent pas d'optimiser l'efficacité de la station (optimisation de l'énergie ou du gaz).

Un but de la présente invention est de pallier tout ou partie des inconvénients de l'art antérieur relevés ci-dessus.

A cette fin, la station selon l'invention, par ailleurs conforme à la définition générique qu'en donne le préambule ci-dessus, est essentiellement caractérisée en ce qu'elle comprend un circuit de refroidissement comportant une conduite de transfert ayant une extrémité amont reliée à la sortie du vaporiseur et une extrémité aval reliée à l'échangeur de chaleur, la conduite de transfert étant configurée pour transférer du fluide sortant du vaporiseur dans l'échangeur de chaleur et réaliser un échange de chaleur entre ce fluide vaporisé et le gaz comprimé qui est transféré dans le réservoir à remplir.

Par ailleurs, des modes de réalisation de l'invention peuvent comporter l'une ou plusieurs des caractéristiques suivantes :
- le circuit de refroidissement comprend une conduite de récupération comprenant une extrémité amont reliée à l'échangeur de chaleur et une extrémité aval reliée à la conduite de remplissage, pour réinjecter dans la conduite de remplissage le fluide qui a échangé thermiquement avec le gaz comprimé,
- l'extrémité aval de la conduite de récupération est reliée à la conduite de remplissage en amont du vaporiseur,
- la station comprend au moins un stockage tampon raccordé à la conduite de remplissage en aval du compresseur principal et en amont de l'échangeur de chaleur,
- la station comprend deux stockages tampon raccordés en parallèle à la conduite de remplissage en aval du compresseur principal et en amont de l'échangeur de chaleur,
- la station comprend un compresseur auxiliaire ayant une entrée d'aspiration reliée à un premier stockage tampon et une sortie reliée au second stockage tampon pour permettre le transfert et la compression de gaz depuis le premier vers le second stockage tampon,

L'invention concerne également un procédé de remplissage de réservoir(s) de gaz sous pression, notamment d'hydrogène, au moyen d'une station conforme à l'une quelconque des caractéristiques ci-dessus ou ci-dessous dans lequel le fluide liquéfié est réchauffé dans le vaporiseur à une température comprise entre - 250°C et 0°C et de préférence entre -180°C et -90°C et notamment comprise entre -150°C et -100°C.

Selon d'autres particularités possibles :
- à l'entrée du compresseur principal, le fluide à compresser a une température comprise entre et -250°C et 0°C et de préférence comprise entre - 180°C et -90°C et une pression comprise entre 2 et 20 bar et de préférence compris entre 8 et 12bar,
- le procédé comprend une étape de transfert de fluide vaporisé par le vaporiseur dans l'échangeur de chaleur pour réaliser refroidissement du gaz comprimé relativement chaud transféré au réservoir à remplir par échange de chaleur avec ledit fluide vaporisé relativement plus froid,
- le procédé comprend une étape de réinjection, dans la conduite de remplissage, du fluide vaporisé ayant échangé thermiquement dans l'échangeur de chaleur avec le gaz comprimé
- le fluide vaporisé ayant échangé thermiquement dans l'échangeur de chaleur avec le gaz comprimé est réinjecté en amont du vaporiseur,
- à la sortie du compresseur principal, le gaz a une pression comprise entre 200 et 700 et de préférence entre 400 et 600bar,
- le procédé comporte une étape de transfert du fluide compressé par le compresseur principal dans un premier stockage (9) tampon,
- le procédé comporte une étape de réchauffage de gaz prélevé dans le ciel gazeux de la réserve dans le vaporiseur et une étape de compression de ce gaz réchauffé.

L'invention peut concerner également tout dispositif ou procédé alternatif comprenant toute combinaison des caractéristiques ci-dessus ou ci-dessous.

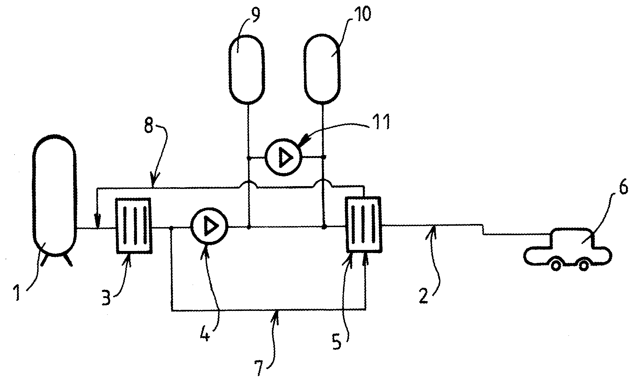

D'autres particularités et avantages apparaîtront à la lecture de la description ci-après, faite en référence à la figure unique qui représente une vue schématique et partielle d'un exemple de structure et de fonctionnement d'une station selon l'invention.

La station de remplissage de réservoir(s) de gaz sous pression illustrée à la figure unique comprend une réserve 1 de fluide liquéfié, par exemple un réservoir cryogénique d'hydrogène liquide.

La station comprend une conduite 2 de remplissage comprenant une extrémité amont reliée à la réserve 1 de fluide liquéfié et au moins une extrémité aval destinée être reliée à un réservoir 6 à remplir (par exemple via au moins un flexible).

La conduite 2 de remplissage comprend, disposés en série, un vaporiseur 3, un compresseur 4 principal et un échangeur 5 de chaleur.

La station comprend également un circuit 7, 8 de refroidissement comportant une conduite 7 de transfert ayant une extrémité amont reliée à la sortie du vaporiseur 3 et une extrémité aval reliée à l'échangeur 5 de chaleur. Cette conduite 7 de transfert est configurée pour transférer du fluide sortant du vaporiseur 3 dans l'échangeur 5 de chaleur et réaliser un échange de chaleur (de préférence indirect) entre ce fluide vaporisé relativement froid et le gaz comprimé relativement chaud qui est transféré dans le réservoir 6 à remplir.

Par exemple, la station comprend un système de vanne(s), de préférence pilotées, permettant de contrôler le débit de fluide froid de refroidissement dans la conduite 7 de refroidissement. Par exemple, la conduite 7 de transfert est raccordée en dérivation à la conduite 2 de remplissage. Une ou des vannes (à deux voies ou à trois voies) peuvent être prévues pour répartir le débit de fluide entre la conduite 7 de transfert et l'entrée du compresseur 4. Par exemple, ces vannes peuvent être pilotées par un organe électronique de commande comprenant un microprocesseur. Ce pilotage peut être asservi par exemple à une consigne de température du gaz transféré dans le réservoir 6.

Le circuit 7, 8 de refroidissement comprend de préférence également une conduite 8 de récupération ayant une extrémité amont reliée à l'échangeur 5 de chaleur et une extrémité aval reliée à la conduite 2 de remplissage. Ceci permet de réinjecter dans la conduite 2 de remplissage le fluide relativement froid qui a échangé thermiquement avec le gaz comprimé.

Comme représenté, l'extrémité aval de la conduite 8 de récupération peut être reliée à la conduite 2 de remplissage en amont du vaporiseur 3.

Comme illustré également, la station peut comprendre au moins un stockage 9, 10 tampon raccordé à la conduite 2 de remplissage en aval du compresseur 4 principal et en amont de l'échangeur 5 de chaleur. Par exemple, deux stockages 9, 10 tampon (ou plus) sont raccordés en parallèle à la conduite 2 de remplissage en aval du compresseur 4 principal et en amont de l'échangeur 5 de chaleur.

Ces stockages 9, 10 tampon peuvent stocker du gaz comprimé par le compresseur 4 principal.

La station peut comprendre un compresseur 11 auxiliaire additionnel ayant une entrée d'aspiration reliée à un premier stockage 9 tampon et une sortie reliée au second 10 stockage tampon, pour permettre le transfert et la compression de gaz depuis le premier vers le second 10 stockage tampon.

Le compresseur 11 auxiliaire peut être un compresseur à haute pression, c'est-à-dire un compresseur configuré pour comprimer du gaz à une pression supérieure au compresseur 4 principal.

Les stockages 9, 10 tampon peuvent être utilisés pour transférer du gaz dans le réservoir 6 à remplir par équilibrage de pression (cascade notamment). De plus l'un au moins de ces réservoirs 9, 10 tampon peut le cas échéant être utilisé pour servir de source de gaz au compresseur 11 en vue de remplir le réservoir 6.

Ainsi, de l'hydrogène liquide peut être vaporisé à travers du vaporiseur 3 (tel qu'un réchauffeur atmosphérique par exemple) pour atteindre une température inférieure à -100°C, par exemple de l'ordre de -150°C.

Cet hydrogène relativement froid, à une pression par exemple de l'ordre de 10 bar, peut sous forme peut être comprimé à moyenne pression (entre 100 et 600 bar par exemple) dans le compresseur 4 principal.

A l'entrée du compresseur 4 principal, le fluide à compresser a par exemple une température comprise entre et -250°C et 0°C et de préférence comprise entre -180°C et -90°C, notamment entre -150°C et -100°C. Ce fluide a par exemple une pression comprise entre 2 et 20 bar et de préférence compris entre 8 et 12bar.

Cet hydrogène à moyenne pression peut être transféré dans un stockage 9 tampon à moyenne et/ou comprimé via le compresseur 11 auxiliaire à haute pression 5. Ce gaz à haute pression (par exemple 700 à 1100bar) peut être stocké dans un stockage 10 tampon à haute pression.

Pour refroidir le gaz comprimé relativement chaud (par exemple à température ambiante issu des stockages 9, 10 tampon), avant de remplir le réservoir 6, une partie de l'hydrogène froid, à la sortie du vaporiseur/réchauffeur 3 peut ainsi être amené dans l'échangeur 5 de refroidissement.

Cet hydrogène froid qui a cédé des frigories et à été réchauffé dans l'échangeur 5 peut être réinjecté via la conduite 8 de récupération en amont du vaporiseur 3 pour être mélangé à l'hydrogène froid venant de la réserve 1 liquide.

Ceci participe au réchauffage du liquide avant son passage dans le vaporiseur/réchauffeur atmosphérique 3.

A noter que l'hydrogène du ciel gazeux de la réserve 1 liquide peut être utilisé en étant réchauffé dans le vaporiseur/réchauffeur atmosphérique 3 avant d'être comprimé dans le compresseur froid 3 (par exemple via la conduite 2 de remplissage ou une autre conduite dédiée non représentée).

Ainsi, tout en étant de structure simple te peu coûteuse, la station permet une récupération efficace de tout ou partie des pertes du réservoir d'hydrogène liquide. De plus, les frigories de l'hydrogène liquide sont utilisées avantageusement pour refroidir le gaz, juste avant le remplissage du réservoir 6.

## Revendications

1. Station de remplissage de réservoir(s) de gaz sous pression, notamment d'hydrogène, comprenant une réserve (1) de fluide liquéfié, une conduite (2) de remplissage comprenant une extrémité amont reliée à la réserve (1) de fluide liquéfié et une extrémité aval destinée être reliée à un réservoir (6) à remplir, la conduite (2) de remplissage comprenant, disposés en série, un vaporiseur (3), un compresseur (4) principal et un échangeur (5) de chaleur de refroidissement du fluide comprimé en aval du compresseur (4) principal avant son transfert dans un réservoir (6) à remplir, la station comprenant un circuit (7, 8) de refroidissement comportant une conduite (7) de transfert ayant une extrémité amont reliée à la sortie du vaporiseur (3) et une extrémité aval reliée à l'échangeur (5) de chaleur, la conduite (7) de transfert étant configurée pour transférer du fluide sortant du vaporiseur (3) dans l'échangeur (5) de chaleur et réaliser un échange de chaleur entre ce fluide vaporisé et le gaz comprimé qui est transféré dans le réservoir (6) à remplir, **caractérisée en ce que** le circuit (7, 8) de refroidissement comprend une conduite (8) de récupération comprenant une extrémité amont reliée à l'échangeur (5) de chaleur et une extrémité aval reliée à la conduite (2) de remplissage, pour réinjecter dans la conduite (2) de remplissage le fluide qui a échangé thermiquement avec le gaz comprimé.

2. Station selon la revendication 1, **caractérisée en ce que** l'extrémité aval de la conduite (8) de récupération est reliée à la conduite (2) de remplissage en amont du vaporiseur (3).

3. Station selon l'une quelconque des revendications 1 à 2, **caractérisée en ce qu'**elle comprend au moins un stockage (9, 10) tampon raccordé à la conduite (2) de remplissage en aval du compresseur (4) principal et en amont de l'échangeur (5) de chaleur.

4. Station selon la revendication 3, **caractérisée en ce qu'**elle comprend deux stockages (9, 10) tampon raccordés en parallèle à la conduite (2) de remplissage en aval du compresseur (4) principal et en amont de l'échangeur (5) de chaleur.

5. Station selon la revendication 4, **caractérisée en ce qu'**elle comprend un compresseur (11) auxiliaire ayant une entrée d'aspiration reliée à un premier stockage (9) tampon et une sortie reliée au second (10) stockage tampon pour permettre le transfert et la compression de gaz depuis le premier (9) vers le second (10) stockage tampon.

6. Procédé de remplissage de réservoir(s) de gaz sous pression, notamment d'hydrogène, au moyen d'une station conforme à l'une quelconque des revendications précédentes dans lequel le fluide liquéfié est réchauffé dans le vaporiseur (3) à une température comprise entre et -250°C et 0°C et de préférence entre -180°C et -90°C et notamment entre -150°C et - 100°C, le procédé comprenant une étape de transfert de fluide vaporisé par le vaporiseur (3) dans l'échangeur (5) de chaleur pour réaliser refroidissement du gaz comprimé relativement chaud transféré au réservoir (6) à remplir par échange de chaleur avec ledit fluide vaporisé relativement plus froid, le procédé comprenant une étape de réinjection, dans la conduite (2) de remplissage, du fluide vaporisé ayant échangé thermiquement dans l'échangeur (5) de chaleur avec le gaz comprimé.

7. Procédé selon la revendication 6 **caractérisé en ce que**, à l'entrée du compresseur (4) principal, le fluide à compresser a une température comprise entre et -250°C et 0°C et de préférence comprise entre -180°C et -90°C et une pression comprise entre 2 et 20 bar et de préférence compris entre 8 et 12bar.

8. Procédé selon la revendication 6 ou 7, **caractérisé en ce que** le fluide vaporisé ayant échangé thermiquement dans l'échangeur (5) de chaleur avec le gaz comprimé est réinjecté en amont du vaporiseur (3).

9. Procédé selon l'une quelconque des revendications 6 à 8, **caractérisé en ce que**, à la sortie du compresseur (4) principal, le gaz a une pression comprise entre 200 et 700 et de préférence entre 400 et 600bar.

10. Procédé selon l'une quelconque des revendications 6 à 9, **caractérisé en ce qu'**il comporte une étape de transfert du fluide compressé par le compresseur (4) principal dans un premier stockage (9) tampon.

11. Procédé selon l'une quelconque des revendications 6 à 10 , **caractérisé en ce qu'**il comporte une étape de réchauffage de gaz prélevé dans le ciel gazeux de la réserve (1) dans le vaporiseur (3) et une étape de compression de ce gaz réchauffé.

## Patentansprüche

1. Station zum Befüllen von Tanks mit unter Druck stehendem Gas, insbesondere mit Wasserstoff, umfassend einen Speicherbehälter (1) mit verflüssigtem Medium, eine Befüllleitung (2), die ein mit dem Speicherbehälter (1) mit verflüssigtem Medium verbundenes stromaufwärtiges Ende und ein stromabwärtiges Ende, das dazu bestimmt ist, mit einem zu befüllenden Tank (6) verbunden zu werden, umfasst, wobei die Befüllleitung (2), in Reihe angeordnet, einen Verdampfer (3), einen Hauptkompressor (4) und einen Wärmetauscher (5) zum Kühlen des verdichteten Mediums stromab des Hauptkompressors (4) vor seinem Transfer in einen zu befüllenden Tank (6) umfasst, wobei die Station einen Kühlkreis (7, 8) umfasst, der eine Transferleitung (7) mit einem mit dem Auslass des Verdampfers (3) verbundenen stromaufwärtigen Ende und einem mit dem Wärmetauscher (5) verbundenen stromabwärtigen Ende aufweist, wobei die Transferleitung (7) dazu ausgestaltet ist, aus dem Verdampfer (3) austretendes Medium in den Wärmetauscher (5) zu transferieren und einen Wärmeaustausch zwischen diesem verdampften Medium und dem verdichteten Gas, das in den zu befüllenden Tank (6) transferiert wird, auszuführen, **dadurch gekennzeichnet, dass** der Kühlkreis (7, 8) eine Rückgewinnungsleitung (8) umfasst, die ein mit dem Wärmetauscher (5) verbundenes stromaufwärtiges Ende und ein mit der Befüllleitung (2) verbundenes stromabwärtiges Ende umfasst, um das Medium, das Wärme mit dem verdichteten Gas ausgetauscht hat, wieder in die Befüllleitung (2) einzuleiten.

2. Station nach Anspruch 1, **dadurch gekennzeichnet, dass** das stromabwärtige Ende der Rückgewinnungsleitung (8) mit der Befüllleitung (2) stromauf des Verdampfers (3) verbunden ist.

3. Station nach einem der Ansprüche 1 bis 2, **dadurch gekennzeichnet, dass** sie mindestens einen Pufferspeicher (9, 10) umfasst, der an die Befüllleitung (2) stromab des Hauptkompressors (4) und stromauf des Wärmetauschers (5) angeschlossen ist.

4. Station nach Anspruch 3, **dadurch gekennzeichnet, dass** sie zwei Pufferspeicher (9, 10) umfasst, die an die Befüllleitung (2) parallel stromab des Hauptkompressors (4) und stromauf des Wärmetauschers (5) angeschlossen sind.

5. Station nach Anspruch 4, **dadurch gekennzeichnet, dass** sie einem Hilfskompressor (11) umfasst, der einen der mit einem ersten Pufferspeicher (9) verbundenen Ansaugeinlass besitzt und einen Auslass, der mit dem zweiten (10) Pufferspeicher verbunden ist, um das Transferieren und Verdichten von Gas vom ersten (9) zum zweiten (10) Pufferspeicher zu ermöglichen.

6. Verfahren zum Befüllen von Tanks mit unter Druck stehendem Gas, insbesondere mit Wasserstoff, mittels einer Station nach einem der vorhergehenden Ansprüche, bei dem das verflüssigte Medium in dem Verdampfer (3) auf eine Temperatur zwischen -250 °C und 0 °C und bevorzugt zwischen -180 °C und -90 °C und insbesondere zwischen - 150 °C und -100 °C angewärmt wird, wobei das Verfahren einen Schritt des Transferierens von durch den Verdampfer (3) verdampftem Medium in den Wärmetauscher (5) umfasst, um das Kühlen des relativ warmen verdichteten Gases, das an den zu befüllenden Tank (6) zu transferieren ist, durch Wärmeaustausch mit dem relativ kälteren verdampften Medium auszuführen, wobei das Verfahren einen Schritt des Wiedereinleitens des verdampften Mediums, das im Wärmetauscher (5) Wärme mit dem verdichteten Gas ausgetauscht hat, in die Befüllleitung (2) umfasst.

7. Verfahren nach Anspruch 6, **dadurch gekennzeichnet, dass** das zu verdichtende Medium am Einlass des Hauptkompressors (4) eine Temperatur zwischen -250 °C und 0 °C und bevorzugt zwischen -180 °C und -90 °C und einen Druck zwischen 2 und 20 bar und bevorzugt zwischen 8 und 12 bar hat.

8. Verfahren nach Anspruch 6 oder 7, **dadurch gekennzeichnet, dass** das verdampfte Medium, das im Wärmetauscher (5) Wärme mit dem verdichteten Gas ausgetauscht hat, stromauf des Verdampfers (3) wieder eingeleitet wird.

9. Verfahren nach einem der Ansprüche 6 bis 8, **dadurch gekennzeichnet, dass** das Gas am Auslass des Hauptkompressors (4) einen Druck zwischen 200 und 700 und bevorzugt zwischen 400 und 600 bar hat.

10. Verfahren nach einem der Ansprüche 6 bis 9, **dadurch gekennzeichnet, dass** es einen Schritt des Transferierens des vom Hauptkompressor (4) verdichteten Mediums in einen ersten (9) Pufferspeicher umfasst.

11. Verfahren nach einem der Ansprüche 6 bis 10, **dadurch gekennzeichnet, dass** es einen Schritt des Anwärmens von aus der Gasphase des Speicherbehälters (1) entnommenem Gas im Verdampfer (3) und einen Schritt des Verdichtens dieses angewärmten Gases umfasst.

## Claims

1. Installation for filling a tank or tanks with pressurized gas, in particular with hydrogen, comprising a liquefied fluid store (1), a filling line (2) comprising an upstream end connected to the liquefied fluid store (1) and a downstream end intended to be connected to a tank (6) to be filled, the filling line (2) comprising, arranged in series, a vaporizer (3), a main compressor (4) and a heat exchanger (5) for cooling the compressed fluid downstream of the main compressor (4) before it is transferred into a tank (6) to be filled, the installation comprising a cooling circuit (7, 8) comprising a transfer line (7) having an upstream end connected to the outlet of the vaporizer (3) and a downstream end connected to the heat exchanger (5), the transfer line (7) being configured to transfer fluid leaving the vaporizer (3) into the heat exchanger (5) and to carry out an exchange of heat between this vaporized fluid and the compressed gas which is transferred into the tank (6) to be filled, **characterized in that** the cooling circuit (7, 8) comprises a recovery line (8) comprising an upstream end connected to the heat exchanger (5) and a downstream end connected to the filling line (2) for reinjecting into the filling line (2) the fluid that has exchanged thermally with the compressed gas.

2. Installation according to Claim 1, **characterized in that** the downstream end of the recovery line (8) is connected to the filling line (2) upstream of the vaporizer (3).

3. Installation according to either one of Claims 1 and 2, **characterized in that** it comprises at least one buffer storage (9, 10) connected to the filling line (2) downstream of the main compressor (4) and upstream of the heat exchanger (5).

4. Installation according to Claim 3, **characterized in that** it comprises two buffer storages (9, 10) connected in parallel to the filling line (2) downstream of the main compressor (4) and upstream of the heat exchanger (5) .

5. Installation according to Claim 4, **characterized in that** it comprises an auxiliary compressor (11) having a suction inlet connected to a first buffer storage (9) and an outlet connected to the second buffer storage (10), to allow transfer and compression of gas from the first (9) to the second (10) buffer storage.

6. Method for filling a tank or tanks with pressurized gas, in particular with hydrogen, by means of an installation according to any one of the preceding claims, wherein the liquefied fluid is heated in the vaporizer (3) to a temperature of between -250°C and 0°C and preferably between -180°C and -90°C and in particular between -150°C and -100°C, the method comprising a step of transferring fluid vaporized by the vaporizer (3) into the heat exchanger (5) for cooling the relatively hot compressed gas transferred to the tank (6) to be filled by heat exchange with said relatively cooler vaporized fluid, the method comprising a step of reinjecting, into the filling line (2), the vaporized fluid having exchanged thermally in the heat exchanger (5) with the compressed gas.

7. Method according to Claim 6, **characterized in that**, at the inlet of the main compressor (4), the fluid to be compressed has a temperature of between -250°C and 0°C and preferably of between -180°C and -90°C and a pressure of between 2 and 20 bar and preferably of between 8 and 12 bar.

8. Method according to Claim 6 or 7, **characterized in that** the vaporized fluid which has thermally exchanged in the heat exchanger (5) with the compressed gas is reinjected upstream of the vaporizer (3).

9. Method according to any one of Claims 6 to 8, **characterized in that**, at the outlet of the main compressor (4), the gas has a pressure of between 200 and 700 and preferably between 400 and 600 bar.

10. Method according to any one of Claims 6 to 9, **characterized in that** it comprises a step of transferring the fluid compressed by the main compressor (4) into a first buffer storage (9).

11. Method according to any one of Claims 6 to 10, **characterized in that** it comprises a step of heating gas taken from the gas headspace of the store (1) in the vaporizer (3) and a step of compressing this heated gas.
